# EUROPÄISCHE PATENTSCHRIFT

(11) **EP 3 583 055 B1**
(45) Veröffentlichungstag und Bekanntmachung des Hinweises auf die Patenterteilung: **15.03.2023**
(21) Anmeldenummer: 18707296.2
(22) Anmeldetag: 14.02.2018
(51) Int. Cl.: B65G 43/10

(54) **FÖRDERANLAGE UND VERFAHREN ZUM BETREIBEN EINER FÖRDERANLAGE ZUM TRANSPORTIEREN VON MATERIAL**
CONVEYOR SYSTEM AND METHOD FOR OPERATING A CONVEYOR SYSTEM FOR TRANSPORTING MATERIAL
SYSTÈME DE TRANSPORT ET PROCÉDÉ PERMETTANT DE FAIRE FONCTIONNER UN SYSTÈME DE TRANSPORT POUR ACHEMINER UN MATÉRIAU

(30) Priorität: 16.02.2017 DE 102017202527
(43) Veröffentlichungstag der Anmeldung: 25.12.2019
(73) Patentinhaber: FLSmidth A/S, 2500 Valby (DK)
(72) Erfinder: DORIGO, Marco, 40477 Düsseldorf (DE)
(86) Internationale Anmeldenummer: PCT/EP2018/053721
(87) Internationale Veröffentlichungsnummer: WO 2018/149892

(56) Entgegenhaltungen:
- Abb: "Application note Downhill conveyors benefit from AC drives' energy saving capability and lower maintenance costs", , 9. Februar 2010 (2010-02-09), Seiten 1-2, XP055470108, Gefunden im Internet: URL:https://library.e.abb.com/public/e2fee a97fac59fccc12576c400588340/14778_FactFile AD16_Downhill_conveyors_RevA_lowres.pdf [gefunden am 2018-04-24]
- Abb: "Active front end technology applied to a downhill belt conveyor", , 15. Mai 2006 (2006-05-15), Seiten 1-12, XP055470114, Gefunden im Internet: URL:https://library.e.abb.com/public/630bd 81cf071af4ec1257b35003073ff/3BHS%20229%207 28%20ZAB%20E01%20REVA_LR.pdf [gefunden am 2018-04-24]
- Abb: "ABB drives in mining", , 22. August 2012 (2012-08-22), Seiten 1-20, XP055470121, Gefunden im Internet: URL:https://library.e.abb.com/public/2205e 72865c2c747c1257a620026d001/Mining%20broch ure_EN_lowres.pdf [gefunden am 2018-04-24]

## Beschreibung

Die Erfindung betrifft Förderanlage zum Transportieren von Material, sowie ein Verfahren zum Betreiben einer Förderanlage.

Förderanlagen, wie beispielsweise Bandförderanlagen werden üblicherweise zum Transport von Materialien, beispielsweise im Betrieb eines Tagebaus, eingesetzt. Zum Transport von Material über weite Strecken werden sogenannte LDC (Long Distance Conveyor) eingesetzt, die das Material anschließend auf einen SDC (Short Distance Conveyor) übergeben. Die Fördereinrichtungen weisen üblicherweise jeweils mindestens eine Antriebseinrichtung auf. Solche LDC Förderanlagen sind beispielsweise aus der EP 2718208 A1 bekannt.

Kommt es zu einem Ausfall der Stromzufuhr zu den Antriebseinrichtungen, werden die Fördereinrichtungen gebremst, wobei die längere der beiden Fördereinrichtungen eine erheblich längere Bremszeit aufweist. Dadurch kommt es zu Materialansammlungen auf der kürzeren Fördereinrichtung, was häufig zu Beschädigungen der Fördereinrichtung oder weiteren Komponenten der Förderanlage führt. Der Anwendungshinweis "Downhill conveyors benefit from AC drives' energy saving capability and lower maintenance costs", URL:https://library.e.abb.com/public/ e2feea97fac59fccc12576c400588340/14778_FactFileAD16_Downhill_conveyors_RevA_lowres.pdf, offenbart eine Förderanlage nach dem Oberbegriff des Anspruchs 1 sowie ein Verfahren nach dem Oberbegriff des Anspruchs 5.

Davon ausgehend ist es Aufgabe der vorliegenden Erfindung, eine Förderanlage bereitzustellen, bei welcher eine Beschädigung der Fördereinrichtungen im Falle eines Stromausfalls zuverlässig vermieden wird.

Diese Aufgabe wird erfindungsgemäß durch eine Vorrichtung mit den Merkmalen des unabhängigen Vorrichtungsanspruchs 1, sowie durch ein Verfahren mit den Merkmalen des unabhängigen Verfahrensanspruchs 5 gelöst. Vorteilhafte Weiterbildungen ergeben sich aus den abhängigen Ansprüchen.

Eine Förderanlage zum Transportieren von Material umfasst nach der Erfindung eine erste Fördereinrichtung und eine erste Antriebseinrichtung zum Antrieb der ersten Fördereinrichtung, eine in Transportrichtung des Materials der ersten Fördereinrichtung nachgeschaltete zweite Fördereinrichtung und eine zweite Antriebseinrichtung zum Antrieb der zweiten Fördereinrichtung, wobei die erste Antriebseinrichtung derart ausgebildet ist, dass sie als Generator, insbesondere als elektrodynamische Bremse zum Bremsen der ersten Fördereinrichtung, betreibbar ist.

Bei der ersten Fördereinrichtung handelt es sich insbesondere um einen LDC (Long Distance Conveyor), der sich beispielsweise über eine Länge von ca. 400 m bis ca. 15000 m erstreckt. Die zweite Fördereinrichtung ist beispielsweise ein SDC (Short Distance Conveyor), der sich über eine Länge von ca. 30 m bis 300 m erstreckt und in Förderrichtung des Materials stromabwärts der ersten Fördereinrichtung angeordnet ist. Die zweite Fördereinrichtung weist vorzugsweise eine wesentlich geringere Länge als die erste Fördereinrichtung auf. Beispielsweise ist die erste Fördereinrichtung als Langstreckenförderer (overland conveyor) und die zweite Fördereinrichtung als Bunkerzuführband ausgebildet.

Bei der ersten Antriebseinrichtung handelt es sich insbesondere um eine Asynchronmaschine oder eine Drehstromsynchronmaschine, die sowohl als Motor als auch als Generator betrieben werden kann. Im Generatorbetrieb wirkt die erste Antriebseinrichtung als elektrodynamische Bremse, wobei die erste Fördereinrichtung abgebremst wird. Die von der ersten Antriebseinrichtung im Generatorbetrieb erzeugte elektrische Energie wird der Förderanlage zugeführt.

Eine als Generator betreibbare Antriebseinrichtung bietet den Vorteil, dass die beim Bremsen der ersten Fördereinrichtung erzeugte Energie der Fördereinrichtung wieder zugeführt werden kann. Insbesondere im Fall eines Stromausfalls an der Förderanlage ist dies vorteilhaft, da beispielsweise sicherheitstechnisch wichtige Komponenten der Förderanlage von der mittels des Generators erzeugten elektrischen Energie gespeist werden können.

Gemäß der Erfindung steht die erste Antriebseinrichtung mit der zweiten Antriebseinrichtung in Verbindung, sodass mittels der elektrodynamischen Bremse erzeugter elektrischer Strom der zweiten Antriebseinrichtung zuführbar ist. Insbesondere sind die erste und die zweite Antriebseinrichtung über elektrische Leitungen miteinander verbunden. Im Fall einer Unterbrechung der Stromzufuhr zu der Förderanlage im Betrieb, wird die erste Antriebseinrichtung vorzugsweise als Generator betrieben, sodass die erzeugte elektrische Energie der zweiten Antriebseinrichtung zugeführt wird. Die zweite Fördereinrichtung weist auf Grund ihrer erheblich kürzeren Länge verglichen mit der ersten Fördereinrichtung eine wesentlich kürzere Bremszeit auf, sodass bei einem Bremsvorgang im Stromausfall, die zweite Fördereinrichtung bereits steht oder sich mit vergleichsweise geringer Fördergeschwindigkeit bewegt, während die erste Fördereinrichtung eine vergleichsweise hohe Fördergeschwindigkeit aufweist. Die Zufuhr der elektrischen Energie der durch die erste Antriebseinrichtung im Generatorbetrieb erzeugten elektrischen Energie führt dazu, dass die zweite Fördereinrichtung angetrieben wird, während die erste Fördereinrichtung noch in Bewegung ist. Dadurch wird eine Anhäufung von Material auf der zweiten Fördereirichtung verhindert und eine Beschädigung der Förderanlage zuverlässig vermieden.

Die Förderanlage weist gemäß der Erfindung eine Steuerungs-/ Regelungseinrichtung auf zur Steuerung/ Regelung der Stromzufuhr zu der ersten und der zweiten Antriebseinrichtung. Insbesondere wird die Stromzufuhr von der ersten Antriebseinrichtung zu der zweiten Antriebseinrichtung durch die Steuerungs-/ Regelungseinrichtung derart gesteuert/ geregelt, dass die zweite Fördereinrichtung eine Fördergeschwindigkeit aufweist, die im Wesentlichen der Fördergeschwindigkeit der ersten Fördereinrichtung entspricht. Vorzugsweise weist die Förderanlage Messeinrichtungen zum Messen der Fördergeschwindigkeiten der ersten und der zweiten Fördereinrichtung auf, wobei die Messeinrichtungen mit der Steuerungs-/ Regelungseinrichtung verbunden sind. Die Stromzufuhr von der ersten Antriebseinrichtung zu der zweiten Antriebseinrichtung wird insbesondere in Abhängigkeit der ermittelten Fördergeschwindigkeiten, vorzugsweise der Differenz der Fördergeschwindigkeiten der ersten Fördereinrichtung zu der zweiten Fördereinrichtung, geregelt/ gesteuert.

Die Steuerungs-Regelungseinrichtung steht gemäß der Erfindung mit der ersten und der zweiten Antriebseinrichtung in Verbindung und ist derart ausgebildet, dass sie einen Stromausfall, wobei die Stromzufuhr zu der Förderanlage unterbrochen ist, erkennt und daraufhin die Antriebseinrichtung von einem Motorbetrieb in einen Generatorbetrieb als elektrodynamische Bremse schaltet.

Gemäß einer weiteren Ausführungsform ist die zweite Fördereinrichtung zumindest teilweise unterhalb eines Endbereichs der ersten Fördereinrichtung angeordnet, sodass Material von der ersten Fördereinrichtung auf die zweite Fördereinrichtung fällt. Die erste und die zweite Fördereinrichtung weisen jeweils einen Aufgabebereich an einem Endbereich, auf den das Material aufgeben wird, und einen Abwurfbereich an dem anderen Endbereich auf, an dem das Material von der jeweiligen Fördereinrichtung abgeworfen wird. Der Aufgabebereich der zweiten Fördereinrichtung ist vorzugsweise unterhalb des Abwurfbereichs der ersten Fördereinrichtung angeordnet.

Zwischen der ersten Fördereinrichtung und der zweiten Fördereinrichtung ist gemäß einer weiteren Ausführungsform eine Vorrichtung zum Leiten des Materials von der ersten Fördereinrichtung zu der zweiten Fördereinrichtung angeordnet. Beispielsweise handelt es sich bei der Vorrichtung um eine Schurre oder Materialrutsche oder ähnliches.

Zumindest eine der ersten und der zweiten Fördereinrichtung ist gemäß einer weiteren Ausführungsform eine Bandfördereinrichtung oder ein Plattenband, Abzugsband, Geräteband, wie beispielsweise ein Absetzer.

Die Erfindung umfasst auch ein Verfahren zum Betreiben einer Förderanlage zum Transportieren von Material gemäß Anspruch 5 aufweisend zumindest die Schritte:
Fördern des Materials mit einer ersten Fördereinrichtung, die von einer ersten Antriebseinrichtung angetrieben wird, und
Fördern des Materials mit einer in Transportrichtung des Materials der ersten Fördereinrichtung nachgeschalteten zweiten Fördereinrichtung, die von einer zweiten Antriebseinrichtung angetrieben wird, wobei
die erste Antriebseinrichtung zum Bremsen der ersten Fördereinrichtung als Generator, insbesondere als elektrodynamische Bremse, betrieben wird.

Die mit Bezug auf die Förderanlage beschriebenen Vorteile und Erläuterungen treffen in verfahrensmäßiger Entsprechung ebenfalls auf das Verfahren zum Betreiben einer Förderanlage zu.

Die erste Antriebseinrichtung erzeugt im Betrieb als elektrodynamische Bremse Strom, der der zweiten Antriebseinrichtung zugeführt wird. Gemäß der Erfindung des Verfahrens wird die erste Antriebseinrichtung in Reaktion auf das Erkennen einer Unterbrechung der Stromzufuhr als elektrodynamische Bremse betrieben. Der Stromfluss von der ersten Antriebseinrichtung zu der zweiten Antriebseinrichtung wird gemäß einer weiteren Ausführungsform der Erfindung in Abhängigkeit des Erkennens eines Stromausfalls gesteuert/ geregelt.

Gemäß einer weiteren Ausführungsform wird die Fördergeschwindigkeit der ersten und der zweiten Fördereinrichtung ermittelt wird und die Stromzufuhr von der ersten Antriebseinrichtung zu der zweiten Antriebseinrichtung in Abhängigkeit der ermittelten Fördergeschwindigkeiten gesteuert / geregelt. Insbesondere wird die Stromzufuhr von der ersten Antriebseinrichtung zu der zweiten Antriebseinrichtung derart gesteuert/ geregelt, dass die Fördergeschwindigkeit der zweiten Fördereinrichtung im Wesentlichen der Fördergeschwindigkeit der ersten Fördereinrichtung entspricht.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine Förderanlage mit zwei Fördereinrichtungen gemäß einem Ausführungsbeispiel.
- Fig. 2: zeigt eine Förderanlage mit zwei Fördereinrichtungen gemäß dem Ausführungsbeispiel der Fig. 1, wobei die Stromzufuhr unterbrochen ist.

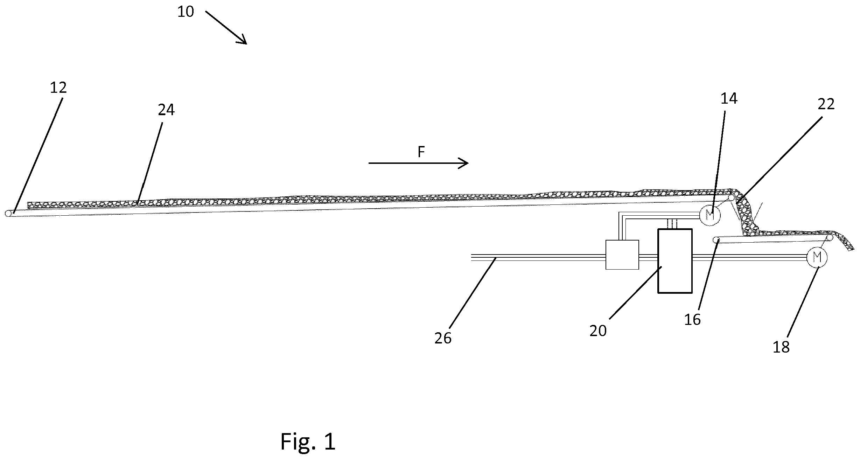

Fig. 1 zeigt eine Förderanlage 10 mit einer ersten Fördereinrichtung 12 und einer zweiten Fördereinrichtung 16. Die erste und die zweite Fördereinrichtung 12, 16 sind beispielhaft als Förderbänder, wie Plattenbänder oder Schlauchförderbänder, ausgebildet. In dem Ausführungsbeispiel der Fig. 1 erstrecken sich die erste und die zweite Fördereinrichtung im Wesentlichen parallel zueinander, eine von der parallelen abweichende Ausrichtung der Fördereinrichtungen ist allerdings ebenfalls denkbar. Auf der ersten und der zweiten Fördereinrichtung 12, 16 liegt ein Material 24, wie beispielsweise aus einem Tagebau abgebaute Mineralien, Erze, Kohle, Gestein oder Sand, auf und wird in Förderrichtung F mittels der ersten Fördereinrichtung 12 transportiert. Die als Bandförderanlagen ausgeführte erste und zweite Fördereinrichtung 12, 16 weisen jeweils einen Aufgabebereich, auf den das Material 24 aufgegeben wird, und einen Abwurfbereich, an dem das Material von dem Förderband abgeworfen wird, auf. Die zweite Fördereinrichtung 16 schließt sich in Förderrichtung an die erste Fördereinrichtung 12 an und ist teilweise unterhalb der ersten Fördereinrichtung 12 angeordnet, sodass der Aufgabebereich der zweiten Fördereinrichtung 16 unterhalb des Abwurfbereichs der ersten Fördereinrichtung 12 angeordnet ist. Die zweite Fördereinrichtung 16 transportiert das Material 24 ebenfalls in Förderrichtung F.

Zwischen der ersten und der zweiten Fördereinrichtung 12, 16 ist ein Vorrichtung 22 zum Leiten des Materials 24 von der ersten Fördereinrichtung 12 zu der zweiten Fördereinrichtung 16 angeordnet. In Fig. 1 handelt es sich bei der Vorrichtung beispielhaft um eine Schurre. Es ist auch denkbar eine Materialrutsche, weitere Förderbänder oder Bunker mit Austragsmaschinen zum Leiten des Materials 24 zwischen der ersten Fördereinrichtung 12 und der zweiten Fördereinrichtung 16 anzuordnen.

Bei der ersten Fördereinrichtung 12 handelt es sich beispielsweise um ein LDC (Long Distance Conveyor), wobei sich die erste Fördereinrichtung 12 über eine Länge von beispielsweise 400 m - 15000m erstreckt. Die zweite Fördereinrichtung 16 ist beispielsweise ein SDC (Short Distance Conveyor) und weist eine wesentlich geringere Länge verglichen mit der ersten Fördereinrichtung 12 auf und erstreckt sich beispielsweise über eine Länge von ca. 30 bis 300 m

Die Förderanlage 10 umfasst des Weiteren eine erste Antriebseinrichtung 14, die mit der ersten Fördereinrichtung 12 in Verbindung steht, sodass sie diese antreibt. Insbesondere ist die erste Antriebseinrichtung 14 mit einer Antriebstrommel der in Fig. 1 als Bandförderanlage ausgeführten Fördereinrichtung 12 verbunden und treibt diese zur Rotation. Beispielhaft ist die Antriebstrommel an dem Abwurfbereich der ersten Fördereinrichtung 12 angeordnet. Eine zweite Antriebseirichtung 18 ist mit der zweiten Fördereinrichtung 16 verbunden und treibt diese, insbesondere eine am Abwurfende der zweiten Fördereinrichtung 16 angeordnete Antriebstrommel, an.

Die erste Antriebseinrichtung 14 und die zweite Antriebseinrichtung 18 sind über elektrische Leitungen 26 mit dem externen Stromnetz oder einer externen Stromquelle verbunden. Des Weiteren weist die Förderanlage 10 eine Steuerungs-/ Regelungseinrichtung 20 auf, die mit der ersten Antriebseinrichtung 14 und der zweiten Antriebseinrichtung 18 verbunden ist. Die Steuerungs-/ Regelungseinrichtung 20 steuert / regelt den Stromfluss zu der zweiten Antriebseinrichtung 18, insbesondere den Stromfluss zwischen der ersten Antriebseinrichtung 14 und der zweiten Antriebseinrichtung 18. In Figur 1 ist ein störungsfreier Betriebszustand der Förderanlage 10 dargestellt, in dem der ersten Antriebseinrichtung 14 und der zweiten Antriebseinrichtung 18 Strom über die elektrische Leitung 26 zugeführt wird. Die erste Antriebseinheit 14 und die zweite Antriebseinrichtung 18 werden in dem störungsfreien Betriebszustand als Motor betrieben und treiben jeweils die erste Fördereinrichtung 12 und die zweite Fördereinrichtung 16 an. Beispielsweise werden die erste und die zweite Fördereinrichtung 12, 16 derart angetrieben, dass sie im Wesentlichen die gleiche Fördergeschwindigkeit des Materials aufweisen.

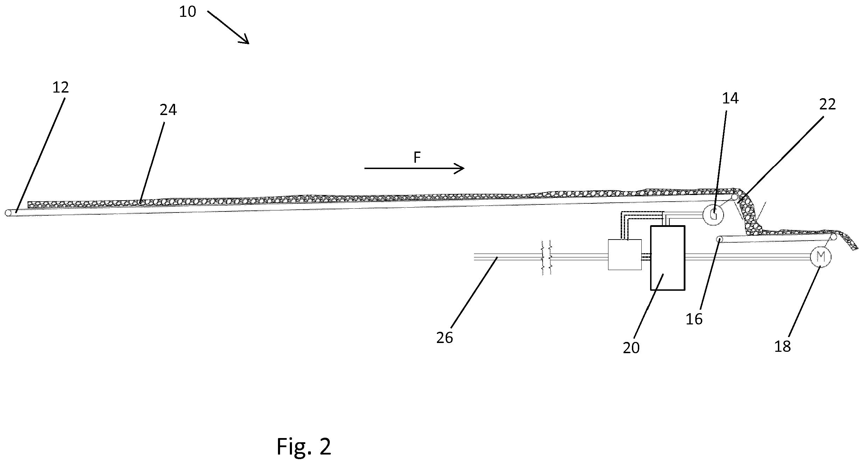

Fig. 2 zeigt eine Förderanlage 10 gemäß dem Ausführungsbeispiel in Fig.1 in einem gestörten Betriebszustand. Fig. 2 weist im Wesentlichen die gleichen Anlagenkomponenten wie Fig. 1 auf, die mit gleichen Bezugszeichen versehen sind.

In dem gestörten Betriebszustand der Fig. 2 ist die Stromzufuhr 26 zu der ersten Antriebseinrichtung 14 und zu der zweiten Antriebseinrichtung 16 unterbrochen. In dem Fall einer unterbrochenen Stromzufuhr wird die erste Antriebseinrichtung 14 als Generator, insbesondere als elektrodynamische Bremse betrieben. Beispielsweise detektiert die Steuerungs- / Regelungseinrichtung 20 eine solche Unterbrechung der Stromzufuhr zu der ersten und zweiten Antriebseinrichtung 14, 16 und schaltet die erste Antriebseinrichtung 14 von dem Motorbetrieb in den Generatorbetrieb, insbesondere den Betrieb als elektrodynamische Bremse. Die zweite Fördereinrichtung wird mittels der sich im Generatorbetrieb befindenden ersten Antriebseinrichtung 14 gebremst. Zusätzlich zu der als Bremse wirkenden ersten Antriebseinrichtung 14 ist beispielsweise eine weitere mechanische Bremse an der ersten Fördereinrichtung 12 angebracht, um die Bremskraft zu verstärken.

Eine elektrodynamische Bremse handelt es sich beispielsweise um einen Asynchronmotor oder einen Drehstromsynchronmotor, der als Generator betrieben wird. Die Bewegungsenergie der Fördereinrichtung 12 wird durch den Generator in elektrische Energie umgewandelt. Die gewonnene elektrische Energie wird dem Motor 18 der Fördereinrichtung 16 eingespeist.

Die von der ersten Antriebseinrichtung 14 im Generatorbetrieb erzeugte elektrische Energie wird der zweiten Antriebseinrichtung 18 zugeführt. Die Stromzufuhr von der ersten Antriebseinrichtung 14 zu der zweiten Antriebseinrichtung 18 wird mittels der Steuerungs- / Regelungseinrichtung 20 gesteuert / geregelt. Beispielsweise weisen die erste und die zweite Fördereinrichtung 12, 16 in Fig. 1 und 2 nicht dargestellte Messeinrichtungen zum Ermitteln der Fördergeschwindigkeiten der ersten Fördereinrichtung 12 und der zweiten Fördereinrichtung 16 auf, wobei die Messergebnisse an die Steuerungs-/ Regelungseinrichtung 20 übermittelt werden. Die Stromzufuhr von der ersten Antriebseinrichtung 14 zu der zweiten Antriebseinrichtung 18 wird mittels der Steuerungs- / Regelungseinrichtung 20 in Abhängigkeit einer ermittelten Differenz der Fördergeschwindigkeiten der ersten und der zweiten Fördereinrichtung 12, 16 gesteuert/ geregelt. Zum Beispiel wird die Fördergeschwindigkeit der zweiten Fördereinrichtung 16 an die Fördergeschwindigkeit der ersten Fördereinrichtung 12 angepasst, sodass die Differenz der Fördergeschwindigkeiten Null oder sehr gering ist.

Dadurch wird vermieden, dass sich in einem gestörten Betrieb, in dem die Stromzufuhr zu der ersten und der zweiten Fördereinrichtung 12, 16 unterbrochen ist, Material auf der zweiten Fördereinrichtung 16 und/ oder in der Vorrichtung 22 zum Leiten von Material von der ersten zu der zweiten Fördereinrichtung 12, 16 ansammelt und dies zu Beschädigungen der Förderanlage 10 führt. Eine an die Fördergeschwindigkeit der ersten Fördereinrichtung 12 angepasste Fördergeschwindigkeit der zweiten Fördereinrichtung 16 sorgt für einen gleichmäßigen Transport des Materials 24 und verhindert eine hohe Belastung der zweiten Fördereinrichtung durch Ansammlungen von Material über das erträgliche Maß hinaus.

### Bezugszeichenliste

- 10: Förderanlage
- 12: erste Fördereinrichtung
- 14: erste Antriebseinrichtung
- 16: zweite Fördereinrichtung
- 18: zweite Antriebseinrichtung
- 20: Steuerungs-/ Regelungseinrichtung
- 22: Vorrichtung zum Leiten des Materials
- 24: Material
- 26: Leitung

- F: Förderrichtung

## Patentansprüche

1. Förderanlage (10) zum Transportieren von Material (24) aufweisend
eine erste Fördereinrichtung (12) und eine erste Antriebseinrichtung (14) zum Antrieb der ersten Fördereinrichtung (12),
eine in Transportrichtung des Materials der ersten Fördereinrichtung nachgeschaltete zweite Fördereinrichtung (16) und eine zweite Antriebseinrichtung (18) zum Antrieb der zweiten Fördereinrichtung (16),
wobei die erste Antriebseinrichtung (14) derart ausgebildet ist, dass sie als Generator, insbesondere als elektrodynamische Bremse zum Bremsen der ersten Fördereinrichtung (12), betreibbar ist,
wobei die Förderanlage (10) eine Steuerungs-/ Regelungseinrichtung (20) aufweist zur Steuerung-/ Regelung einer Stromzufuhr von der ersten Antriebseinrichtung (14) zu der zweiten Antriebseinrichtung (18), wobei die Steuerungs-/ Regelungseinrichtung (20) mit der ersten und der zweiten Antriebseinrichtung (14, 18) in Verbindung steht, wobei die erste Antriebseinrichtung (14) mit der zweiten Antriebseinrichtung (18) in Verbindung steht, sodass mittels der ersten Antriebseinrichtung (14) erzeugter elektrischer Strom der zweiten Antriebseinrichtung (18) zuführbar ist
**dadurch gekennzeichnet, dass**
die Steuerungs-/ Regelungseinrichtung (20) derart ausgebildet ist, dass sie eine Unterbrechung der Stromzufuhr erkennt und daraufhin die erste Antriebseinrichtung (14) von einem Motorbetrieb in einen Generatorbetrieb als elektrodynamische Bremse schaltet.

2. Förderanlage nach Anspruch 1, wobei die zweite Fördereinrichtung (16) zumindest teilweise unterhalb eines Endbereichs der ersten Fördereinrichtung (12) angeordnet ist, sodass Material (24) von der ersten Fördereinrichtung (12) auf die zweite Fördereinrichtung (16) fällt.

3. Förderanlage nach einem der vorangehenden Ansprüche, wobei zwischen der ersten Fördereinrichtung (12) und der zweiten Fördereinrichtung (16) eine Vorrichtung (22) zum Leiten des Materials (24) von der ersten Fördereinrichtung (12) zu der zweiten Fördereinrichtung (16) vorgesehen ist.

4. Förderanlage nach einem der vorangehenden Ansprüche, wobei zumindest eine der ersten und der zweiten Fördereinrichtung (12, 16) eine Bandfördereinrichtung ist.

5. Verfahren zum Betreiben einer Förderanlage (10) zum Transportieren von Material aufweisend zumindest die Schritte:
Fördern des Materials mit einer ersten Fördereinrichtung (12), die von einer ersten Antriebseinrichtung (14) angetrieben wird,
und Fördern des Materials mit einer in Transportrichtung des Materials der ersten Fördereinrichtung (12) nachgeschalteten zweiten Fördereinrichtung (16), die von einer zweiten Antriebseinrichtung (18) angetrieben wird,
wobei die erste Antriebseinrichtung (14) zum Bremsen der ersten Fördereinrichtung (12) als Generator, insbesondere als elektrodynamische Bremse, betrieben wird, wobei die erste Antriebseinrichtung (14) derart mit der zweiten Antriebseinrichtung (18) in Verbindung steht, dass mittels der ersten Antriebseinrichtung (14) erzeugter elektrischer Strom der zweiten Antriebseinrichtung (18) zugeführt wird,
**dadurch gekennzeichnet, dass**
die erste Antriebseinrichtung (14) in Reaktion auf das Erkennen einer Unterbrechung der Stromzufuhr als elektrodynamische Bremse betrieben wird, und dass der Stromfluss von der ersten Antriebseinrichtung (14) zu der zweiten Antriebseinrichtung (16) in Abhängigkeit des Erkennens eines Stromausfalls gesteuert/ geregelt wird.

6. Verfahren nach Anspruch 5, wobei die Fördergeschwindigkeit der ersten und der zweiten Fördereinrichtung (12, 16) ermittelt wird und die Stromzufuhr von der ersten Antriebseinrichtung (14) zu der zweiten Antriebseinrichtung (18) in Abhängigkeit der ermittelten Fördergeschwindigkeiten gesteuert / geregelt wird.

## Claims

1. Conveyor system (10) for transporting material (24), comprising
a first conveyor device (12) and a first drive device (14) for driving the first conveyor device (12),
a second conveyor device (16) downstream of the first conveyor device in the transport direction of the material and a second drive device (18) for driving the second conveyor device (16),
wherein the first drive device (14) is configured such that it can be operated as a generator, in particular as an electrodynamic brake for braking the first conveyor device (12),
wherein the conveyor (10) system has a control/regulating device (20) for controlling/regulating supply of power from the first drive device (14) to the second drive device (18), the control/regulating device (20) being connected to the first and second drive device (14, 18), the first drive device (14) being connected to the second drive device (18), in such a way that electrical power generated by the first drive device (14) can be supplied to the second drive device (18),
**characterised in that**
the control/regulating device (20) is configured in such a way that it detects an interruption in the power supply and thereupon switches the first drive device (14) from motor operation to generator operation as an electrodynamic brake.

2. Conveyor system according to claim 1, wherein the second conveyor device (16) is arranged at least partially below an end region of the first conveyor device (12) so that material (24) falls from the first conveyor device (12) onto the second conveyor device (16).

3. Conveyor system according to any one of the preceding claims, wherein a device (22) for guiding the material (24) from the first conveyor device (12) to the second conveyor device (16) is provided between the first conveyor device (12) and the second conveyor device (16).

4. Conveyor system according to any one of the preceding claims, wherein at least one of the first and second conveyor devices (12, 16) is a belt conveyor.

5. Method for operating a conveyor system (10) for transporting material, comprising at least the steps:
conveying the material with a first conveyor device (12) driven by a first drive device (14),
and conveying the material with a second conveying device (16) which is connected downstream of the first conveying device (12) in the transport direction of the material and is driven by a second drive device (18),
wherein the first drive device (14) is operated as a generator, in particular as an electrodynamic brake, for braking the first conveyor device (12), wherein the first drive device (14) is connected to the second drive device (18) in such a way that electric power generated by means of the first drive device (14) is supplied to the second drive device (18),
**characterised in that**
the first drive device (14) is operated as an electrodynamic brake in response to the detection of an interruption of the power supply, and **in that** the current flow from the first drive device (14) to the second drive device (16) is controlled/regulated in dependence on the detection of a power failure.

6. Method according to claim 5, wherein the conveying speed of the first and the second conveying device (12, 16) is determined and the power supply from the first drive device (14) to the second drive device (18) is controlled/regulated in dependence on the determined conveying speeds.

## Revendications

1. Installation de transport (10) pour transporter du matériau (24) présentant
un premier dispositif de transport (12) et un premier dispositif d'entraînement (14) pour entraîner le premier dispositif de transport (12),
un second dispositif de transport (16) en aval du premier dispositif de transport dans la direction de transport du matériau et un second dispositif d'entraînement (18) pour entraîner le second dispositif de transport (16),
dans lequel le premier dispositif d'entraînement (14) est conçu de sorte qu'il peut être utilisé en tant que générateur, en particulier en tant que frein électrodynamique pour freiner le premier dispositif de transport (12),
dans lequel le système de transport (10) présente un dispositif de commande/régulation (20) pour commander/réguler une alimentation électrique du premier dispositif d'entraînement (14) au second dispositif d'entraînement (18), dans laquelle le dispositif de commande/régulation (20) est connecté au premier et au second dispositif d'entraînement (14, 18), dans laquelle le premier dispositif d'entraînement (14) est connecté au second dispositif d'entraînement (18), de sorte que le courant électrique généré par le premier dispositif d'entraînement (14) peut être acheminé vers le second dispositif d'entraînement (18)
**caractérisée en ce que**
le dispositif de commande/régulation (20) est conçu de sorte qu'il détecte une interruption de l'alimentation électrique et commute ensuite le premier dispositif d'entraînement (14) d'un fonctionnement du moteur à un fonctionnement du générateur en tant que frein électrodynamique.

2. Installation de transport selon la revendication 1, dans laquelle le second dispositif de transport (16) est disposé au moins partiellement sous une zone d'extrémité du premier dispositif de transport (12) de sorte que du matériau (24) tombe du premier dispositif de transport (12) sur le second dispositif de transport (16).

3. Installation de transport selon l'une quelconque des revendications précédentes, dans laquelle un dispositif (22) pour guider le matériau (24) du premier dispositif de transport (12) au second dispositif de transport (16) est prévu entre le premier dispositif de transport (12) et le second dispositif de transport (16).

4. Installation de transport selon l'une quelconque des revendications précédentes, dans laquelle au moins un parmi le premier et le second dispositif de transport (12, 16) est un dispositif de transport à bande.

5. Procédé de fonctionnement d'une installation de transport (10) pour le transport de matériau, présentant au moins les étapes consistant à :
transporter le matériau avec un premier dispositif de transport (12) qui est entraîné par un premier dispositif d'entraînement (14),
et transporter le matériau avec un second dispositif de transport (16) en aval du premier dispositif de transport (12) dans la direction de transport du matériau, qui est entraîné par un second dispositif d'entraînement (18),
dans lequel le premier dispositif d'entraînement (14) pour freiner le premier dispositif de transport (12) est actionné en tant que générateur, en particulier en tant que frein électrodynamique, dans lequel le premier dispositif d'entraînement (14) est connecté au second dispositif d'entraînement (18) de manière qu'au moyen du premier dispositif d'entraînement (14), le courant électrique généré est acheminé au second dispositif d'entraînement (18),
**caractérisée en ce que**
le premier dispositif d'entraînement (14) est actionné en tant que frein électrodynamique en réponse à la détection d'une interruption de l'alimentation électrique, et **en ce que** le flux de courant du premier dispositif d'entraînement (14) au second dispositif d'entraînement (16) est commandé/régulé en fonction de la détection d'une coupure de courant.

6. Procédé selon la revendication 5, dans lequel la vitesse de transport du premier et du second dispositif de transport (12, 16) est déterminée et l'alimentation électrique du premier dispositif d'entraînement (14) au second dispositif d'entraînement (18) est commandée/régulée en fonction des vitesses de transport déterminées.
